# EUROPÄISCHE PATENTSCHRIFT

(11) **EP 2 561 929 B1**
(45) Veröffentlichungstag und Bekanntmachung des Hinweises auf die Patenterteilung: **28.09.2016**
(21) Anmeldenummer: 12180943.8
(22) Anmeldetag: 17.08.2012
(51) Int. Cl.: B01L 3/02, G01N 35/10

(54) **Verfahren zum Detektieren der Oberfläche einer Flüssigkeitsprobe in einem Probenbehälter**
Method for detecting the surface of a fluid sample in a sample container
Procédé de détection de la surface d'un échantillon de liquide dans un porte-échantillon

(30) Priorität: 18.08.2011 DE 102011081186
(43) Veröffentlichungstag der Anmeldung: 27.02.2013
(73) Patentinhaber: Hamilton Bonaduz AG, 7402 Bonaduz (CH)
(72) Erfinder: Peetz, Torsten, 7000 Chur (CH); Cerniato, Mario, 7000 Chur (CH)
(74) Vertreter: Müller Hoffmann & Partner

(56) Entgegenhaltungen:
- WO-A1-01/88549
- DE-U1-202006 010 293
- US-A1- 2009 075 386

## Beschreibung

Die vorliegende Erfindung betrifft ein Verfahren zum Detektieren der Oberfläche einer Flüssigkeitsprobe in einem Probenbehälter einer Dosiervorrichtung, insbesondere eines Pipettierautomaten, mit einer von dem und zu dem Probebehälter hin beweglichen Pipettiereinrichtung, wobei die Pipettiereinrichtung wenigstens ein Pipettierrohr mit darin beweglichem Pipettierkolben und eine am wenigstens einen Pipettierrohr anbringbare, insbesondere auswechselbare Pipettierspitze, und einen dem wenigstens einen Pipettierrohr zugeordneten Drucksensor umfasst, wobei das Verfahren folgende Schritte umfasst:
Bewegen der Pipettierspitze zum Probenbehälter hin,
Bewegen des Pipettierkolbens in einer zur Bewegungsrichtung der Pipettierspitze entgegengesetzten Richtung,
Erfassen des in der Pipettierspitze herrschenden Drucks und Vergleichen eines den erfassten Druck repräsentierenden Druckmesswerts mit einem Sollmesswert, Erfassen eines Druckdifferenzzeitpunkts, an dem der Druckmesswert außerhalb eines durch den Sollmesswert bestimmten Toleranzbereichs liegt.

Ein derartiges Verfahren wird von der Anmelderin bei automatisierten Pipettiervorgängen unter Verwendung von Pipettierautomaten bereits angewendet, um zu detektieren, an welcher Position eine Pipettierspitze mit der Oberfläche der Probenflüssigkeit in Kontakt kommt. Es wird hierzu auf die Informationen auf der Homepage der Anmelderin verwiesen: http://www.hamiltonrobotics.com/en-uk/hamilton-robotics/technology/liquid-level-detection/. Der Zweck des bekannten Verfahrens ist es, die Position der Oberfläche einer zu pipettierenden Probenflussigkeit durch Messung des Druckes innerhalb der Pipettierspitze zu bestimmen. Ist die Position der Oberfläche der Probenflüssigkeit bestimmt, kann die Pipettierspitze um eine bestimmte Eintauchtiefe in die Probenflüssigkeit eingeführt bzw. eingetaucht werden, um anschließend Probenflüssigkeit in die Pipettierspitze zu aspirieren mittels des im Pipettierrohr beweglichen Pipettierkolbens. Durch die vorhergehende Bestimmung der Position der Oberfläche der Probenflüssigkeit kann in vorteilhafter Weise ein zu tiefes Eintauchen der Pipettierspitze und damit das Risiko eines unerwünschten Anhaftens der Flussigkeit an der Aussenfläche der Pipettierspitze minimiert werden. Bleibt zuviel Probenflussigkeit an der Außenseite der Pipettierspitze haften, geht diese mit der Entsorgung der Pipettierspitze verloren.

Es hat sich gezeigt, dass es mit dem derzeitigen Verfahren nicht möglich ist, eine Schaumschicht zu detektieren, die sich oberhalb der Flüssigkeitsprobe in einem Probenbehälter bilden kann. Solche Schaumschichten können je nach Viskosität der Probenflüssigkeit aus kleinen oder/und größeren Schaumblasen bestehen. Beim bekannten Verfahren wird in den Pipettierspitzen beim Auftreffen auf Flüssigkeitshüllen von Schaumblasen kurzzeitig eine Druckveränderung detektiert, welche dem Sollmesswert entspricht, so dass im Bereich der Schaumblase bzw. der Schaumschicht fälschlicherweise die Oberfläche der Probenflüssigkeit detektiert wird. Da sich die Pipettierspitze an dieser Position allerdings noch in einer Schaumschicht und nicht in der Probenflüssigkeit befindet, wird eine falsche Position der Oberfläche der Probenflüssigkeit angenommen, was beim anschießenden weiteren Eintauchen der Pipettierspitze dazu führen kann, dass die Pipettierspitze nicht oder nicht ausreichend tief in die Probenflüssigkeit eingetaucht wird. Hierdurch kann es passieren, dass keine oder nur zu wenig Probenflüssigkeit aspiriert wird, weil noch ein Schaumanteil mit aspiriert wird. Dies hat zur Folge, dass die tatsächlich aspirierte Menge an Probenflüssigkeit nicht der vorgegebenen Menge Probenflüssigkeit entspricht, die eigentlich aspiriert werden soll.

Derzeit wird eine sogenannte Schaumüberwachung erst während der Aspiration bzw. während der Dispensation von Probenflüssigkeit ermöglicht. Somit kann erst nach dem Aspirieren bzw. Dispensieren eine Aussage über die Qualität des Pipettiervorgangs, insbesondere über die Entnahme der korrekten Menge Probenflüssigkeit getroffen werden. Da der Vorgang des Aspirierens beim Vorliegen einer Schaumschicht beim bisherigen Verfahren zu früh (Pipettierspitze ist nicht oder nicht ausreichend in die Probenflüssigkeit eingetaucht) beginnt, ist das aspirierte Probenflüssigkeitsvolumen kleiner als ein Sollvolumen. Somit kann der Pipettiervorgang fehlerhaft sein, was zu weiteren Problemen bzw. Fehlern bei der Verarbeitung und Analyse der aspirierten Flüssigkeitsprobe führen kann, wie etwa falsche Mischungsverhältnisse mit zugefügten Reagenzien, keine ausreichende Menge an Probenflüssigkeit um mehrere Testreihen durchführen zu können u.ä. Sofern nach dem Aspirieren bzw. Dispensieren festgestellt wird, dass ein unzureichendes Flüssigkeitsvolumen verwendet worden ist, ist es erforderlich, entweder den Vorgang für diesen Probenbehälter zu wiederholen oder die weitere Verarbeitung als möglicherweise fehlerhaft zu kennzeichnen.

Aufgabe der Erfindung ist es, das Verfahren weiter zu optimieren, um eine verbesserte Detektion der Oberfläche der Probenflüssigkeit zu ermöglichen.

Hierzu wird vorgeschlagen, dass das Verfahren ferner folgenden Schritt umfasst: Bestimmen, ob der erfasste Druckmesswert bei fortlaufender Erfassung des Drucks in der Pipettierspitze während einer seit dem Druckdifferenzzeitpunkt gemessenen Dauer innerhalb des Toleranzbereichs des Sollmesswerts liegt.

Wird mit der Pipettierspitze eine Schaumschicht durchstoßen, sind immer wieder veränderte Druckmesswerte detektierbar, wobei diese Druckmesswerte beim Auftreffen der Pipettierspitze auf eine Hülle einer Schaumblase außerhalb des Toleranzbereichs liegen und nach dem Platzen der Schaumhülle wieder innerhalb des Toleranzbereichs. Sobald eine Schaumblasenhülle durchstoßen wurde, wird wieder ein Druckgleichgewicht zwischen Außenluft und Innenvolumen der Pipettierspitze hergestellt aufgrund von nachströmender Umgebungsluft durch die kontinuierliche Gegenbewegung zwischen Pipettierspitze und Pipettierkolben. Der Wechseln zwischen diesen unterschiedlichen Druckmesswerten erfolgt relativ kurz hintereinander, so dass die geforderte Dauer, während welcher der erfasste Druckmesswert innerhalb des Toleranzbereichs bleiben soll, nicht erreicht wird. Die seit dem Druckdifferenzzeitpunkt gemessene Dauer wird in der Regel dann ausreichend lang sein, wenn in die Pipettierspitze während der gesamten Dauer kontinuierlich Probenflüssigkeit aspiriert werden kann ohne, dass Schaumblasen durchstoßen werden, die zu entsprechenden Änderungen beim Druckmesswert führen würden.

Vorzugsweise wird die Dauer, während welcher der erfasste Druckmesswert innerhalb des Toleranzbereichs des Sollmesswerts liegt, vorbestimmt, wobei der Sollmesswert vorzugsweise einstellbar ist. Die vorbestimmte Dauer kann ebenfalls einstellbar sein. Der Sollmesswert als Schwellenwert für den Druckmesswert und die Dauer können beispielsweise in Abhängigkeit von zu aspirierenden Flüssigkeiten und deren Eigenschaften bestimmt sein. Bei Flüssigkeitsproben, die stärker zur Schaumbildung neigen, kann beispielsweise die Dauer länger sein als bei einer Flüssigkeit, die kaum zur Schaumbildung neigt.

Die Position der Oberfläche der Flüssigkeitsprobe wird bevorzugt nach Ablauf der vorbestimmten Dauer bestimmt, vorzugsweise basierend auf den Messwerten für den Druckdifferenzzeitpunkt, für den Zeitpunkt der abgelaufenen Dauer und für zugehörige, insbesondere vertikale Lagewerte der Pipettierspitze relativ zum Probenbehälter. Die Oberfläche der Flüssigkeitsprobe kann somit genau ermittelt werden und die Pipettierspitze kann zwecks Aspirieren von Flüssigkeit an eine gewünschte Position (Eintauchtiefe) unterhalb der Oberfläche der Flüssigkeitsprobe bewegt werden.

Vorzugsweise umfasst das Verfahren ferner den Schritt: wenn der Druckmesswert während der vorbestimmten Dauer einen Wert außerhalb des Toleranzbereichs des Sollmesswerts annimmt, erneutes Erfassen eines nächsten Druckdifferenzzeitpunkts, an dem der Druckmesswert außerhalb eines durch den Sollmesswert bestimmten Toleranzbereichs liegt und erneutes Messen der Dauer während welcher der Druckmesswert innerhalb des Toleranzbereichs des Sollmesswerts liegt. Hierdurch wird gewährleistet, dass beim Durchstoßen von mehreren Schaumblasen der Druckdifferenzzeitpunkt und die Dauer immer wieder neu gemessen werden, so dass die Dauer in der Regel innerhalb einer Schaumschicht nie den vorbestimmten Wert erreichen wird, wie er in der Flüssigkeitsprobe erreicht werden müsste.

Es wird vorgeschlagen, dass als Druckmesswert eine Ableitung, insbesondere die erste Ableitung der erfassten tatsächlichen Druckwerte in der Pipettierspitze verwendet wird. Die durch die erste Ableitung ermittelten Steigungswerte der eigentlichen erfassten Druckwerte ermöglichen eine gute Aussage über starke oder geringe Druckschwankungen, die in der Pipettierspitze gemessen werden. Erst wenn diese Druckschwankungen klein genug sind, bewegt sich die erste Ableitung als Druckmesswert innerhalb des Toleranzbereichs und verbleibt auch während der vorbestimmten Dauer innerhalb dieses Toleranzbereichs. Bevorzugt wird beim Verfahren der Betrag der berechneten Ableitung verwendet.

Die Geschwindigkeit der Bewegung der Pipettiereinrichtung zum Probenbehälter hin und die Geschwindigkeit der Bewegung des Pipettierkolbens in entgegengesetzter Richtung sind bevorzugt im Wesentlichen gleich groß. Dies führt dazu, dass beim Erreichen und Eintauchen in die Flüssigkeit ein im Wesentlichen konstanter Unterdruck in der Pipettierspitze gemessen wird, der auch kaum Schwankungen unterliegt. Es ist zwar denkbar, dass die beiden Geschwindigkeiten von Pipettiereinrichtung und Pipettierkolben unterschiedlich sein können. Dies führt aber zu einem ansteigenden bzw. abfallenden Unterdruck in der Pipettierspitze, der bei der Auswertung berücksichtigt werden muss.

Die Dauer ab dem Druckdifferenzzeitpunkt kann mittels eines Zählers gemessen werden. Hierzu wird ferner vorgeschlagen, dass der Zähler vor dem erneuten Messen der Dauer auf einen Anfangswert, vorzugsweise Null, zurückgesetzt wird.

Die vorbestimmte Dauer oder/und der Sollmesswert können abhängig von wenigstens einer Eigenschaft der zu aspirierenden bzw. dispensierenden Flüssigkeit eingestellt werden oder sein.

Der außerhalb des Toleranzbereichs des Sollmesswerts liegende Druckmesswert zeigt bevorzugt einen in der Pipettierspitze herrschenden Unterdruck an.

Die Erfindung betrifft ferner auch ein Verfahren zum Aspirieren von Flüssigkeit aus einem Probenbehälter einer Dosiervorrichtung, insbesondere eines Pipettierautomaten, mit einer von dem und zu dem Probebehälter hin beweglichen Pipettiereinrichtung, wobei die Pipettiereinrichtung wenigstens ein Pipettierrohr mit darin beweglichem Pipettierkolben und eine am wenigstens einen Pipettierrohr anbringbare, insbesondere auswechselbare Pipettierspitze, und einen dem wenigstens einen Pipettierrohr zugeordneten Drucksensor umfasst, wobei das Verfahren zum Aspirieren anschließend an das zuvor beschriebenen Verfahren zum Detektieren der Oberfläche einer Flüssigkeitsprobe durchgeführt wird, wobei das Verfahren zum Aspirieren wenigstens einen der folgenden Schritte umfasst:
nach Bestimmung der Position der Oberfläche der Flüssigkeitsprobe Bewegen der Pipettierspitze in eine Position oberhalb der Oberfläche der Flüssigkeitsprobe und an dieser Position Ausblasen bzw. Dispensieren des Inhalts in den Probenbehälter zurück durch Bewegen des Pipettierkolbens in Richtung zum Probenbehälter hin;
Stoppen der Bewegung des Pipettierkolbens;
Bewegen der Pipettierspitze an die Position der Oberfläche der Flüssigkeitsprobe;
Bewegen der Pipettierspitze in die Flüssigkeitsprobe hinein, insbesondere auf eine vorbestimmte Eintauchtiefe;
Stoppen der Bewegung der Pipettierspitze;
Aspirieren einer vorbestimmten Menge von Flüssigkeit durch Bewegen des Pipettierkolbens in Richtung weg vom Probenbehälter;
Stoppen der Bewegung des Pipettierkolbens; und
Bewegen der mit Flüssigkeit gefüllten Pipettierspitze aus dem Probenbehälter.

Eine Steuereinrichtung für eine Dosiervorrichtung, insbesondere Pipettierautomaten, kann dazu eingerichtet sein, die Dosiervorrichtung gemäß wenigstens einem der vorgestellten Verfahren zum Detektieren der Oberfläche einer Flüssigkeitsprobe und/oder zum Aspirieren von Flüssigkeit anzusteuern.

Ferner kann eine Dosiervorrichtung, insbesondere ein Pipettierautomat, mit einer von dem und zu dem Probenbehälter hin beweglichen Pipettiereinrichtung, wobei die Pipettiereinrichtung ein Pipettierrohr mit darin beweglichem Pipettierkolben und eine am Pipettierrohr anbringbare, insbesondere auswechselbare Pipettierspitze, und einen Drucksensor umfasst, eine oben beschriebene Steuereinrichtung aufweisen.

Die Dosiervorrichtung kann ferner eine Bedieneinheit umfassen, an welcher für die vorgestellten Verfahren zu verwendende Parameter, wie etwa Sollmesswert oder/und vorbestimmte Dauer einstellbar sind.

Ferner kann bei der Dosiervorrichtung die Steuereinrichtung ferner dazu eingerichtet sein, die Bewegung der Pipettiereinrichtung, des Pipettierkolbens und weiterer Komponenten, wie etwa horizontale Zustelleinrichtung und dergleichen anzusteuern.

Die Erfindung wird nachfolgend unter Bezugnahme auf die anliegenden Figuren beispielhaft und nicht einschränkend anhand einer Ausführungsform beschrieben werden.
- Fig. 1: zeigt in einem schematischen Diagramm die Bestimmung der Oberfläche einer Flüssigkeitsprobe gemäß dem Stand der Technik
- Fig. 2: zeigt in den Teilfiguren a) und b) die Bewegung der Pipettiereinrichtung und des Pipettierkolbens während des Verfahrens zur Bestimmung der Oberfläche (Fig. 2a) sowie den zugehörigen schematischen Verlauf der Druckmesswerte (Fig. 2b).
- Fig. 3: zeigt in einem schematischen Diagramm das erfindungsgemäße Verfahren zur Bestimmung der Oberfläche der Probenflüssigkeit.
- Fig. 4: zeigt in einem schematischen Diagramm das erfindungsgemäße Verfahren zur Bestimmung der Oberfläche der Probenflüssigkeit, wenn auf der Flüssigkeit Schaumblasen vorhanden sind.
- Fig. 5: zeigt in den Teilfiguren a) bis f) schematisch und vereinfacht das Verfahren zum Aspirieren mit vorgeschaltetem Verfahren zur Bestimmung der Oberfläche der Probenflüssigkeit.

Die in den Figuren dargestellten Diagramme zeigen den Verlauf der jeweiligen Kurven stark vereinfacht und schematisch, um das Prinzip des Verfahrens erläutern zu können. Die Darstellungen beruhen zwar auf realen Daten, werden aber hier generalisiert dargestellt.

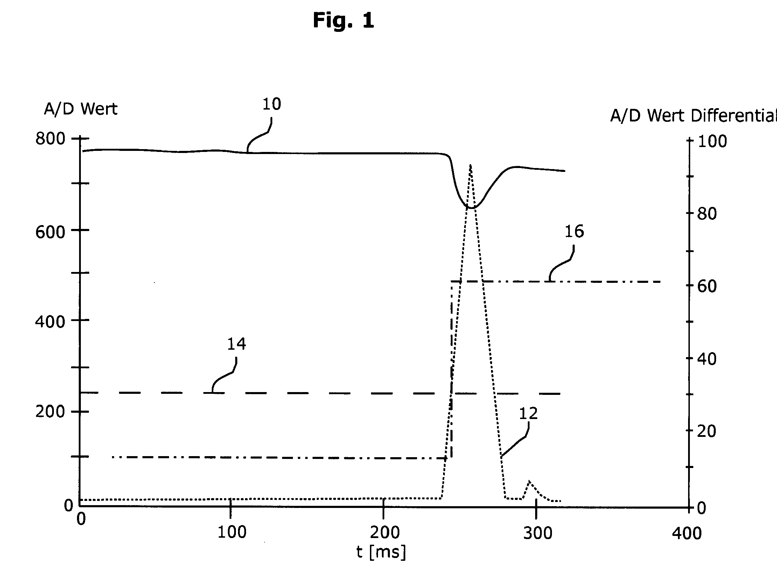

Fig. 1 ist ein Diagramm, in dem der mittels eines auch in der Folge nicht dargestellten Drucksensors in der Pipettierspitze gemessene Druck (A/D Wert) als durchgezogene Linie 10 dargestellt ist. Die fein gestrichelte Linie 12 repräsentiert die erste Ableitung bzw. die Betragsfunktion der ersten Ableitung (A/D Wert Differential) der durchgezogenen Druckkurve 10. Die grob gestrichelte Linie 14 stellt einen Schwellenwert für die erste Ableitung bzw. deren Betrag dar. Wird dieser Schwellenwert 14 vom Betrag der ersten Ableitung (Differential) überschritten, was im Beispiel bei etwa 240ms der Fall ist, wird ein hier strich-punktiert dargestelltes Signal 16 für die Detektion einer Druckänderung in der Pipettierspitze vorzugsweise von 0 auf 1 gesetzt. Es ist anzumerken, dass diese strichpunktierte Linie 16 ohne Bezug zu den Abszissen und Ordinaten des Diagramms rein qualitativ dargestellt ist.

Der gemessene Druck gemäß Kurve 10 oder/und die Kurve 12 des Betrags der ersten Ableitung können als sogenannte Druckmesswerte im Verfahren verwendet werden. Bevorzugt wird die Kurve 12, also die Ableitungsfunktion (Betragsfunktion der Ableitung) als Druckmesswert verwendet. Der Schwellenwert 14 stellt im Kontext der Anmeldung den Sollmesswert dar, wobei ein zugehöriger Toleranzbereich unterhalb des Sollmesswerts liegt. Der sogenannte Druckdifferenzzeitpunkt ist der Zeitpunkt, an dem der Druckmesswert, also hier die Kurve 12 den Sollmesswert, also hier die Kurve 14 insbesondere von unten her überschreitet bzw. kreuzt. Dieser Druckdifferenzzeitpunkt liegt, wie bereits oben erwähnt im vorliegenden Beispiel bei etwa 240ms.

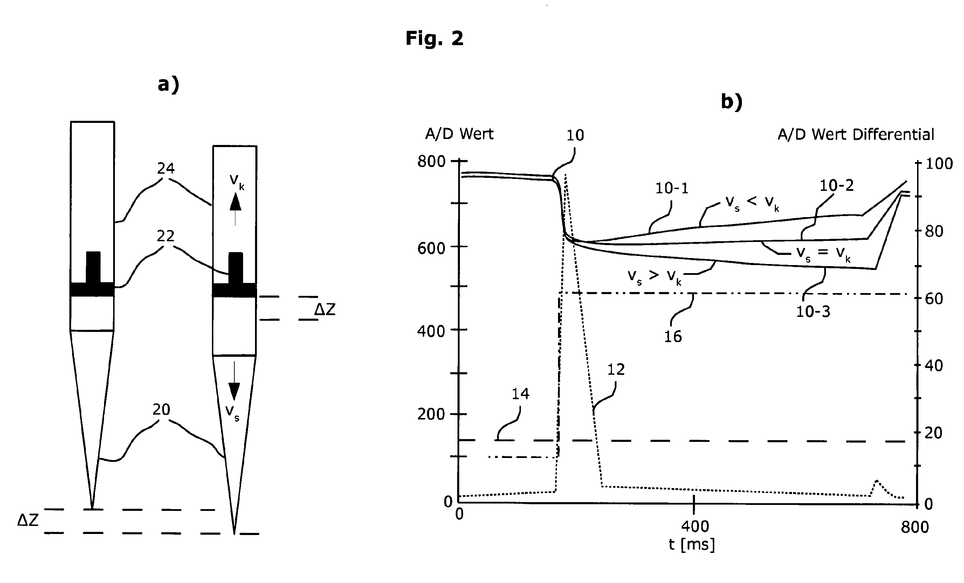

Beim Verfahren zur Bestimmung der Oberfläche von einer Probenflüssigkeit in einem Probenbehälter wird eine Pipettierspitze 20, wie in Fig. 2 rein schematisch dargestellt, mit einer Geschwindigkeit vₛ nach unten in Richtung der nicht dargestellten Probenflüssigkeit bewegt. Gleichzeitig wird ein zugehöriger Pipettierkolben 22, der in einem Pipettierrohr 24 untergebracht ist, mit einer Geschwindigkeit vₖ in entgegengesetzter Richtung, also nach oben bewegt. Hierdurch wird eine in der Regel konstante Aspiration von Umgebungsluft erreicht, solange sich die Pipettierspitze 20 noch oberhalb der Flüssigkeitsprobe befindet. Der in der Pipettierspitze 20 gemessene Druck entspricht aufgrund der nachströmenden Umgebungsluft in etwa dem Umgebungsluftdruck. Sobald die Pipettierspitze 20 die Oberfläche der Flüssigkeitsprobe erreicht, kann keine Umgebungsluft mehr nachströmen, so dass in der Pipettierspitze 20 ein Unterdruck detektiert werden kann. Diese Druckveränderung kann auch als Druckschlag bezeichnet werden, der in Fig. 1 bei etwa 230 bis 245ms festgestellt wird. Beim Verfahren bewegen sich die Pipettierspitze 20 und der Pipettierkolben 24 jeweils um eine Strecke ΔZ in entgegengesetzter Richtung, wobei ΔZ je nach Geschwindigkeit vₛ bzw. vₖ unterschiedlich oder gleich sein kann. Die sich aus verschiedenen Geschwindigkeiten qualitativ ergebenden Druckkurven 10-1, 10-2 und 10-3 sind der Fig. 2b) zu entnehmen. Beim Verfahren zur Bestimmung der Oberfläche der Probenflüssigkeit werden die Pipettierspitze 20 und der Pipettierkolben 22 bevorzugt mit gleicher Geschwindigkeit, also vₛ = vₖ, bewegt, so dass sich ein qualitativer Verlauf gemäß Kurve 10-2 ergibt (Fig. 2c). Es wird noch darauf hingewiesen, dass das Pipettierrohr 24 und der Pipettierkolben 22 bevorzugt Teil einer übergeordneten Pipettiereinrichtung, wie etwa eines Pipettierautomaten sind, und dass die Pipettierspitze 20 als Einweg-Artikel mit dem Pipettierrohr 24 lösbar gekoppelt ist.

Sobald beim bekannten Verfahren der oben beschriebene Druckschlag detektiert worden ist und das Signal 16 (Fig. 1) auf seinen aktivierten Wert, vorzugsweise 1 gesetzt worden ist, wird davon ausgegangen, dass die Oberfläche der Flüssigkeitsprobe erreicht worden ist. Die dann für die Pipettierspitze 20 ermittelte Position relativ zum feststehenden Probenbehälter wird dann als Information über die Lage der Oberfläche der Probenflüssigkeit verwendet. So dass auf Grundlage dieser Positionsinformation eine Eintauchtiefe der Pipettierspitze berechnet werden kann, um eine bestimmte Menge an Probenflüssigkeit aspirieren zu können ohne, dass die Pipettierspitze sehr tief in die Probenflüssigkeit eingetaucht werden muss, um so ein übermäßiges Anhaften von Probenflüssigkeit an der Außenseite der Pipettierspitze 20 zu verhindern.

Bei der Bestimmung der Oberfläche der Probenflüssigkeit hat es sich gezeigt, dass das bisherige Verfahren, das auf die Detektion einer einzigen Druckveränderung, also eines allerersten Druckschlags ausgelegt war, nicht in jedem Fall zu korrekten Ergebnissen geführt hat, insbesondere in Fällen, in denen sich auf der Flüssigkeitsoberfläche noch eine Schaumschicht gebildet hat.

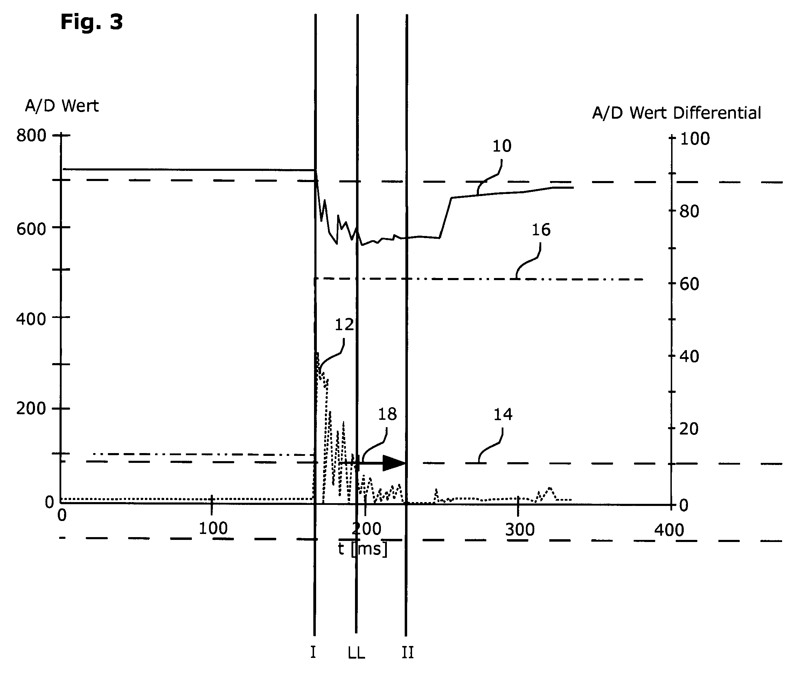

Um das Verfahren zur Bestimmung der Oberfläche der Probenflüssigkeit zu verbessern wird nun, wie des in Fig. 3 dargestellt ist, nach der Detektion eines ersten Druckunterschieds bzw. Druckschlags (im Beispiel bei etwa 170ms, bezeichnet mit der Linie I) der Verlauf des Drucks in der Pipettierspitze weiterhin gemessen und die Ableitungsfunktion hiervon und vorzugsweise deren Betragsfunktion ermittelt. Ferner wird nach dem ersten Druckschlag die Dauer bestimmt, während welcher der Wert bzw. Betrag der Ableitung, also der Druckmesswert, unterhalb des Sollmesswerts 14 liegt. Diese Dauer wird vorzugsweise durch einen Zähler bestimmt, der insbesondere mit Null beginnt und dann inkrementell erhöht wird. Sobald der Betrag der Ableitung erneut über den Sollwert 14 ansteigt, wie dies mehrfach im Bereich von etwa 170-195ms vorkommt, wird der Zähler jedes mal wieder auf Null gesetzt und die Dauer erneut gemessen ab dem Zeitpunkt, an dem die Ableitungsfunktion bzw. deren Betragsfunktion wieder einen Wert unterhalb des Sollmesswerts, also innerhalb des Toleranzbereichs annimmt. Die mehrfachen Drucksprünge, wie sie in der Fig. 3 im Bereich von etwa 170-195ms (zwischen den Linien I und LL) dargestellt sind, rühren davon, dass die Pipettierspitze in einer Schaumschicht mehrere Schaumblasen und deren Flüssigkeitshüllen nacheinander durchstößt, wobei bei jedem Auftreffen der Pipettierspitze auf eine Schaumblasenhülle das Nachströmen von Umgebungsluft verhindert wird und ein kurzzeitiger Unterdruck in der Pipettierspitze detektiert wird. Dieser Unterdruck lässt allerdings sofort wieder nach, sobald die Schaumblasenhülle durchstoßen ist und erneut Umgebungsluft in die Pipettierspitze nachströmen kann aufgrund der entgegengesetzten Bewegung des Pipettierkolbens, wie dies oben zur Fig. 2 bereits erläutert worden ist.

Sobald die Pipettierspitze die Oberfläche der Probenflüssigkeit erreicht hat und dann etwas in die Probenflüssigkit eintaucht, stellt sich ein im Wesentlichen konstanter Unterdruck in der Pipettierspitze ein (Kurve 10 ab etwa 195ms, bezeichnet mit LL für liquid level). Die Druckkurve 10 flacht ab, so dass die ermittelten Steigungswerte, die in der Betragsfunktion 12 der Ableitung dargestellt sind ebenfalls kleinere Werte annehmen, die unterhalb des Sollmesswerts 14 liegen. Wenn nun die Druckmesswerte (Ableitung der Druckwerte) über eine vorbestimmte Dauer, die durch den Pfeil 18 repräsentiert ist, unterhalb des Sollmesswerts 14 bleiben (bis zur Linie II), kann mit großer Sicherheit davon ausgegangen werden, dass sich die Pipettierspitze in der Probenflüssigkeit befindet und dass beim letzten festgestellten Druckschlag, also dem letzten Überschreiten des Sollmesswerts 14, die Oberfläche der Probenflüssigkeit (bei LL) erreicht worden ist.

Stoppt man nach dem Zeitpunkt II die Bewegung der Pipettierspitze in die Probenflüssigkeit hinein und auch die Bewegung des Pipettierkolbens in entgegengesetzter Richtung für dies zu einem Anstieg des Drucks in der Pipettierspitze, weil der darin herrschende Unterdruck durch einströmende Probenflüssigkeit ausgeglichen wird. Dies ist im Beispiel der Fig. 3 etwa ab dem Zeitpunkt 250ms der Fall. Dieser Verlauf der Kurve ist allerdings für die praktische Anwendung im Rahmen eines Verfahrens zur Aspiration von Probenflüssigkeit nicht von wesentlicher Bedeutung, weil das Verfahren zur Bestimmung der Oberfläche der Probenflüssigkeit zum Zeitpunkt II bzw. kurz danach beendet werden kann, da die Oberfläche zum Zeitpunkt LL detektiert worden ist.

Aufgrund der bekannten Geschwindigkeit vₛ, mit welcher die Pipettierspitze in Richtung der Probenflüssigkeit abgesenkt wird, kann aufgrund der gemessenen Zeitdauer und aufgrund von vorzugsweise ebenfalls erfassten Lageinformationen der Pipettierspitze die Lage der Oberfläche der Probenflüssigkeit bestimmt und für die nachfolgende Aspiration von Probenflüssigkeit gespeichert werden.

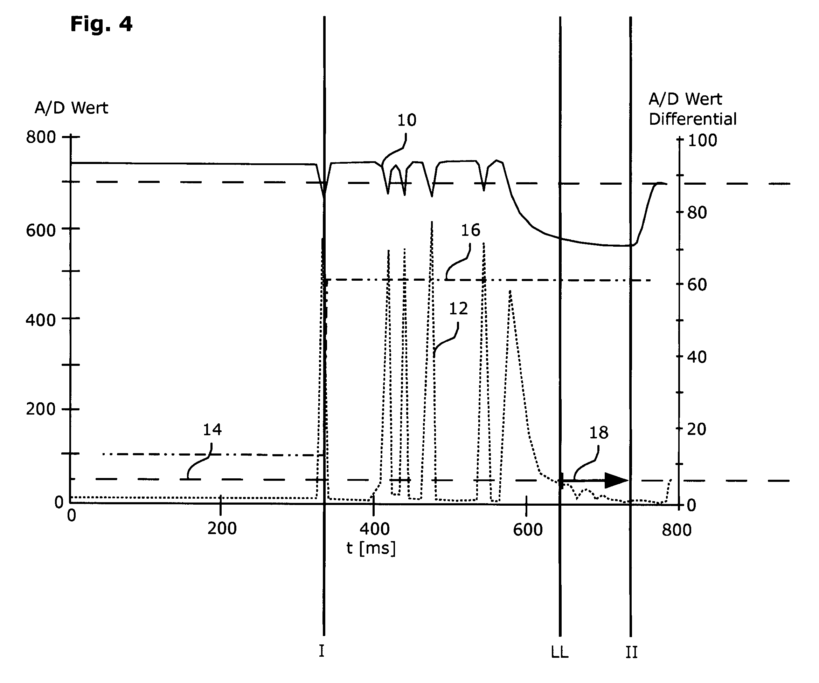

Das Beispiel der Fig. 4 zeigt den Verlauf der Druckkurve 10 und den zugehörigen Ableitungsbeträge 12 in einem Fall, wenn sich oberhalb der Oberfläche der Probenflüssigkeit größere Schaumblasen befinden. Jedes mal, wenn die Pipettierspitze in Kontakt mit der Hülle einer der größeren Schaumblasen kommt, nimmt der Druck in der Pipettierspitze kurzzeitig ab und es wird ein Druckschlag festgestellt. Der Druck steigt anschließend wieder auf einen Wert, der im Wesentlichen dem Umgebungsdruck entspricht, weil Umgebungsluft in die Pipettierspitze nachströmen kann. Sobald die Schaumschicht durchstoßen ist, im vorliegenden Beispiel nach sechs Druckschlägen (kurz vor der Zeitangabe 600ms) bleibt der Unterdruck in der Pipettierspitze über einen längeren Zeitraum im Wesentlichen konstant aufgrund der bevorzugten gleichen Geschwindigkeiten vₛ und vₖ. Die Oberfläche der Probenflüssigkeit wird bei LL bestimmt und die vorbestimmte Dauer, während der die Druckmesswerte (Ableitungen bzw. deren Beträge) 12 unterhalb des Sollmesswerts 14 bleiben wird zwischen den Zeitpunkten LL und II gemessen (Pfeil 18).

Bei einer Schaumschicht mit kleineren Schaumblasen ergibt sich ein etwas anderer Kurvenverlauf mit mehreren dicht hintereinander folgenden Druckschlägen, wobei zwischen zwei Druckschlägen (Schaumblasen) immer nur wenig Umgebungsluft nachströmen kann, so dass der Druck nicht so stark ansteigt, wie im Fall von großen Schaumblasen. Allerdings lassen sich auch in solchen Fällen die Zeitpunkte LL und II sicher bestimmen, da die Ableitungsfunktion (Betragsfunktion) 12 innerhalb sehr kurzer Abstände immer wieder den Sollwert 14 übertrifft und die Dauer (bzw. der zugehörige Zähler) jedes mal wieder zurückgesetzt wird.

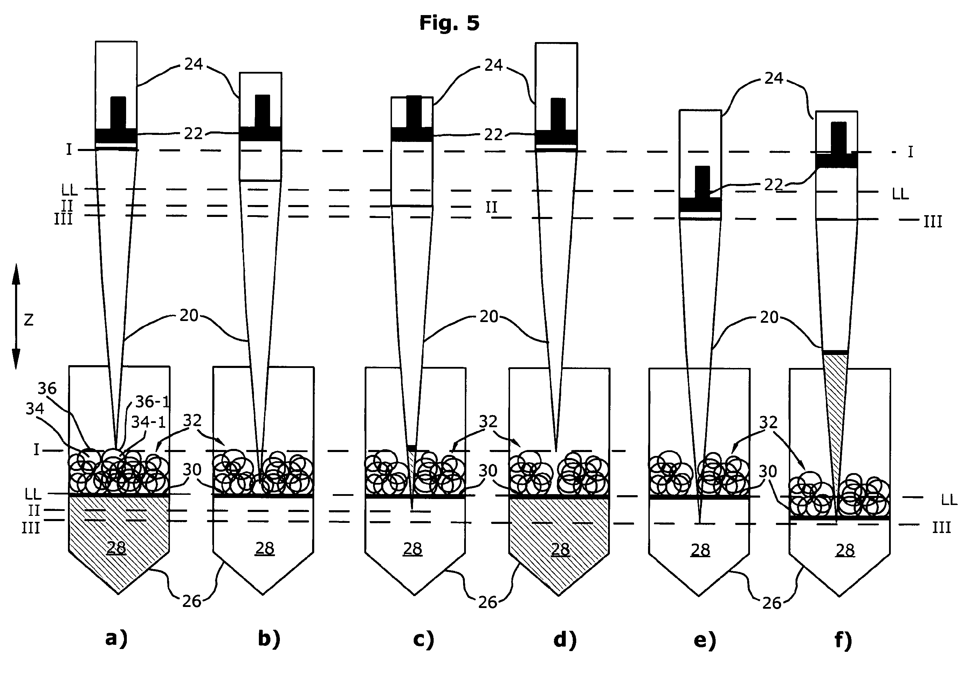

Anhand der Fig. 5 a) bis f) wird nun das Verfahren zum Aspirieren von Probenflüssigkeit unter Anwendung des Verfahrens zur Bestimmung der Oberfläche der Probenflüssigkeit beispielhaft erläutert.

In Fig. 5 sind die Pipettierspitze 20, der Pipettierkolben 22 und das Pipettierrohr 24 vereinfacht und schematisch dargestellt. Unterhalb der Pipettierspitze 20 ist ein Probenbehälter 26 angedeutet, in dem sich Probenflüssigkeit 28 befindet. Die zu bestimmende Oberfläche 30 der Probenflüssigkeit ist aus rein darstellerischen Gründen als dicke schwarze Linie ausgeführt. Oberhalb der Oberfläche 30 befindet sich eine vereinfacht dargestellte Schaumschicht 32, die durch einzelne Schaumblasen 34 mit ihren jeweiligen Schaumblasenhüllen 36 gebildet wird.

Wie diese bereits unter Bezugnahme auf die Fig. 2a) erläutert worden ist, wird die Pipettierspitze 20 mit einer Geschwindigkeit vₛ zum feststehenden Probenbehälter 26 hin (in Z-Richtung nach unten) bewegt. Der Pipettierkolben 22 wird mit einer Geschwindigkeit vₖ in Z-Richtung entgegengesetzt (nach oben) bewegt, so dass während der Bewegung der Pipettierspitze 20 zum Probenbehälter 26 hin Umgebungsluft in die Pipettierspitze 20 aspiriert bzw. eingesogen wird.

Fig. 5a) zeigt den Zustand entsprechend den in den Fig. 3 und 4 dargestellten Zeitpunkt I, bei dem die Pipettierspitze 20 auf eine erste Schaumblase 34-1 bzw. der Hülle 36-1 trifft. Zu diesem Zeitpunkt befindet sich das untere Ende der Pipettierspitze auf einer entsprechenden Position I bezogen auf die Vertikalrichtung Z. Fig. 5b) veranschaulicht das Durchstoßen von mehreren Schaumblasen 36 bei weiterem Absenken der Pipettierspitze. Gleichzeitig wird der Pipettierkolben in entgegengesetzter Richtung weiter nach oben bewegt. Es werden aufgrund des Durchstoßens von mehreren Schaumblasen 36 die bereits zuvor erklärten Druckschläge detektiert. Fig. 5c) zeigt den Zustand zum Zeitpunkt II gemäß den Fig. 3 und 4, zu dem die Pipettierspitze während einer bestimmten Zeitdauer in der Probenflüssigkeit 28 eingetaucht war und Probenflüssigkeit aspiriert worden ist. Wenn die bestimmte Dauer abgelaufen ist und auch der Druckmesswert unterhalb des Sollmesswerts geblieben ist, kann die Position der Oberfläche der Probenflüssigkeit exakt ermittelt werden. Im vorliegenden Beispiel ist die Lage der Oberfläche 30 bzw. die Position der Pipettierspitze, an der sie mit der Oberfläche in Kontakt kommt mit LL bezeichnet.

Wenn die Position der Pipettierspitze 20, an der sie mit der Oberfläche 30 in Kontakt kommt (LL) bestimmt ist, wird die Pipettierspitze 20 in Z-Richtung wieder nach oben bewegt und die aufgenommene Probenflüssigkeit wird durch entgegengesetzte Bewegung des Pipettierkolbens 22 wieder in den Probenbehälter 26 dispensiert (Fig. 5d). Vorzugsweise wird die Pipettierspitze wieder in die Position I bewegt, an der gemäß Fig. 5a) der erste Druckschlag detektiert worden ist. Anschließend wird die Pipettierspitze zusammen mit dem nun nicht bewegten Pipettierkolben 22 wieder in Z-Richtung nach unten zum Probenbehälter 26 hin bewegt und in die Probenflüssigkeit eingetaucht. Dabei wird sie auf eine Tiefe bzw. Position III bewegt, die im Wesentlichen einem Wert entspricht, der sich aus der Position LL und einer vorbestimmten Eintauchtiefe berechnet (Fig. 5e). Vereinfacht kann auch die Position III als Eintauchtiefe bezeichnet werden. Die Eintauchtiefe kann dabei in Abhängigkeit vom zu aspirierenden Flüssigkeitsvolumen gewählt werden, d.h. Je mehr Flüssigkeit aspiriert werden soll, desto größer die Eintauchtiefe. Nachdem die Eintauchtiefe III erreicht worden ist, wird die Bewegung der Pipettierspitze 20 gestoppt und es wird der Pipettierkolben 22 in Z-Richtung nach oben bewegt, um die gewünschte Menge Probenflüssigkeit in die Pipettierspitze 20 zu aspirieren (Fig. 5f). In der Regel ist die Eintauchtiefe III so gewählt, dass sich nach der Aspiration der gewünschten Flüssigkeitsmenge nur ein kleiner Teil der Pipettierspitze 20 in der Probenflüssigkeit, also unterhalb der Oberfläche 30 befindet, so dass möglichst wenig Probenflüssigkeit an der Außenseite der Pipettierspitze haften bleibt. Sobald die gewünschte Flüssigkeitsmenge aspiriert worden ist, wird die Pipettierspitze aus dem Probenbehälter in Z-Richtung nach oben bewegt bei still stehenden Pipettierkolben 22, so dass die aspirierte Flüssigkeitsmenge in der Pipettierspitze 20 verbleibt und zu einem andern Probenbehälter transportiert und dort dispensiert werden kann.

Während des gesamten Ablaufs zur Aspiration einer bestimmten Flüssigkeitsmenge aus einem Probenbehälter mit vorheriger Bestimmung der Oberfläche der Probenflüssigkeit wird also die Pipettierspitze zweimal in Richtung der Probenflüssigkeit zugestellt, beim ersten Mal, um die Flüssigkeitsoberfläche korrekt zu detektieren und beim zweiten Mal (nach dem Ausblasen), um nur das gewünschte Flüssigkeitsvolumen zu aspirieren.

Das hier vorgestellte Verfahren zur Bestimmung der Oberfläche einer Probenflüssigkeit (Fig. 3, 4 und 5a-c) kann als vorgeschaltetes Verfahren zu einem Verfahren zum Aspirieren von Probenflüssigkeit (Fig. 5e und f) angewendet werden, wobei als Zwischen- bzw. Verbindungsschritt (Fig. 5d) ein Leeren bzw. Ausblasen der Pipettierspitze erforderlich ist.

In den Figuren ist jeweils nur eine Pipettierspitze als Beispiel dargestellt. Eine Pipettiereinrichtung (Pipettierautomat), mittels welcher die Verfahren zur Oberflächenbestimmung und zur Aspiration durchgeführt werden kann, umfasst allerdings in der Regel mehrere Pipettierrohre mit daran lösbar angebrachten Pipettierspitzen, so dass gleichzeitig mehrere Flüssigkeitsproben aus mehreren Probenbehältern entnommen werden können. Es wird ferner drauf hingewiesen, dass die Anordnung des Pipettierkolbens im Pipettierrohr eine rein schematische Darstellung ist und keine konstruktiven Details dargestellt worden sind. Dies gilt im Übrigen auch für die bevorzugt lösbare Kopplung zwischen der Pipettierspitze und dem Pipettierrohr.

## Patentansprüche

1. Verfahren zum Detektieren der Oberfläche (30) einer Flüssigkeitsprobe (28) in einem Probenbehälter (26) einer Dosiervorrichtung, insbesondere eines Pipettierautomaten, mit einer von dem und zu dem Probebehälter hin beweglichen Pipettiereinrichtung, wobei die Pipettiereinrichtung wenigstens ein Pipettierrohr (24) mit darin beweglichem Pipettierkolben (22) und eine am wenigstens einen Pipettierrohr (24) anbringbare, insbesondere auswechselbare Pipettierspitze (20), und einen dem wenigstens einen Pipettierrohr (24) zugeordneten Drucksensor umfasst, wobei das Verfahren folgende Schritte umfasst:
Bewegen der Pipettierspitze (20) zum Probenbehälter (26) hin, Bewegen des Pipettierkolbens (22) in einer zur Bewegungsrichtung der Pipettierspitze (20) entgegengesetzten Richtung,
Erfassen des in der Pipettierspitze (20) herrschenden Drucks und Vergleichen eines den erfassten Druck (10) repräsentierenden Druckmesswerts (12) mit einem Sollmesswert (14),
Erfassen eines Druckdifferenzzeitpunkts (I, LL), an dem der Druckmesswert (12) außerhalb eines durch den Sollmesswert (14) bestimmten Toleranzbereichs liegt,
**dadurch gekennzeichnet, dass** das Verfahren ferner folgenden Schritt umfasst:
Bestimmen, ob der erfasste Druckmesswert (12) bei fortlaufender Erfassung des Drucks (10) in der Pipettierspitze (20) während einer seit dem Druckdifferenzzeitpunkt (I, LL) gemessenen Dauer (18) innerhalb des Toleranzbereichs des Sollmesswerts (14) liegt.

2. Verfahren nach Anspruch 1, wobei die Dauer (18), während welcher der erfasste Druckmesswert (12) innerhalb des Toleranzbereichs des Sollmesswerts (14) liegt, vorbestimmt wird, wobei der Sollmesswert (14) vorzugsweise einstellbar ist.

3. Verfahren nach Anspruch 2, wobei die Position der Oberfläche (30) der Flüssigkeitsprobe (28) nach Ablauf der vorbestimmten Dauer (18) bestimmt wird, vorzugsweise basierend auf den Messwerten für den Druckdifferenzzeitpunkt (I, LL), für den Zeitpunkt der abgelaufenen Dauer (18, II) und für zugehörige, insbesondere vertikale Lagewerte der Pipettierspitze (20) relativ zum Probenbehälter (26)

4. Verfahren nach einem der Anspruche 2 oder 3, ferner umfassend den Schritt:
wenn der Druckmesswert (12) während der vorbestimmten Dauer (18) einen Wert außerhalb des Toleranzbereichs des Sollmesswerts (14) annimmt,
erneutes Erfassen eines nächsten Druckdifferenzzeitpunkts (I, LL), an dem der Druckmesswert (12) außerhalb des durch den Sollmesswert (14) bestimmten Toleranzbereichs liegt und erneutes Messen der Dauer (18) während welcher der Druckmesswert (12) innerhalb des Toleranzbereichs des Sollmesswerts (14) liegt.

5. Verfahren nach einem der vorhergehenden Ansprüche, wobei als Druckmesswert (12) eine Ableitung, insbesondere die erste Ableitung der erfassten tatsächlichen Druckwerte (10) in der Pipettierspitze (20) verwendet wird, wobei bevorzugt der Betrag der Ableitung verwendet wird.

6. Verfahren nach einem der vorhergehenden Ansprüche, wobei die Geschwindigkeit (vₛ) der Bewegung der Pipettiereinrichtung bzw. Pipettierspitze (20) zum Probenbehälter (26) hin und die Geschwindigkeit (vₖ) der Bewegung des Pipettierkolbens (24) in entgegengesetzter Richtung im Wesentlichen gleich groß sind.

7. Verfahren nach einem der vorhergehenden Ansprüche, wobei die Dauer (18) ab dem Druckdifferenzzeitpunkt (I, LL) mittels eines Zählers gemessen wird.

8. Verfahren nach Anspruch 4 und 7, wobei der Zähler vor dem erneuten Messen der Dauer (18) auf einen Anfangswert, vorzugsweise Null, zurückgesetzt wird.

9. Verfahren nach einem der Vorhergehenden Ansprüche, wobei die vorbestimmte Dauer (18) oder/und der Sollmesswert (14) abhängig von wenigstens einer Eigenschaft der zu aspirierenden bzw. dispensierenden Flüssigkeit (28) einstellbar sind.

10. Verfahren nach einem der vorhergehenden Ansprüche, wobei der außerhalb des Toleranzbereichs des Sollmesswerts (14) liegende Druckmesswert (12) einen in der Pipettierspitze (20) herrschenden Unterdruck repräsentiert.

11. Verfahren zum Aspirieren von Flüssigkeit (28) aus einem Probenbehälter (26) einer Dosiervorrichtung, insbesondere eines Pipettierautomaten, mit einer von dem und zu dem Probebehälter hin beweglichen Pipettiereinrichtung, wobei die Pipettiereinrichtung wenigstens ein Pipettierrohr (24) mit darin beweglichem Pipettierkolben (22) und eine am wenigstens einen Pipettierrohr (24) anbringbare, insbesondere auswechselbare Pipettierspitze (20), und einen dem wenigstens einen Pipettierrohr (24) zugeordneten Drucksensor umfasst, wobei das Verfahren zum Aspirieren anschließend an das Verfahren zum Detektieren der Oberfläche (30) der Flüssigkeitsprobe (28) nach einem der Ansprüche 1 bis 10 erfolgt, wobei es wenigstens einen der folgenden Schritte umfasst:
nach Bestimmung der Position (LL) der Oberfläche (30) der Flüssigkeitsprobe (28) Bewegen der Pipettierspitze (20) in eine Position (I) oberhalb der Oberfläche (30) der Flüssigkeitsprobe (28) und an dieser Position (I) Ausblasen bzw. Dispensieren des Inhalts der Pipettierspitze (20) in den Probenbehälter (26) zurück durch Bewegen des Pipettierkolbens (22) in Richtung zum Probenbehälter (26) hin;
Stoppen der Bewegung des Pipettierkolbens (22);
Bewegen der Pipettierspitze (20) an die Position (LL) der Oberfläche (30) der Flüssigkeitsprobe (28);
Bewegen der Pipettierspitze (20) in die Flüssigkeitsprobe (28) hinein, insbesondere auf eine vorbestimmte Eintauchtiefe (III);
Stoppen der Bewegung der Pipettierspitze (20);
Aspirieren einer vorbestimmten Menge von Flüssigkeit (28) durch Bewegen des Pipettierkolbens (22) in Richtung weg vom Probenbehälter (26);
Stoppen der Bewegung des Pipettierkolbens (22);
Bewegen der mit Flüssigkeit (28) gefüllten Pipettierspitze (20) aus dem Probenbehälter (26).

## Claims

1. A method for detecting the surface (30) of a liquid sample (28) in a sample container (26) of a metering device, in particular, of a pipetting automat, having a pipetting device, which is moveable to and from the sample container, wherein the pipetting device comprises at least one pipetting tube (24) with a pipetting piston (22) moveable therein and a pipetting tip (20) attachable, in particular, exchangeable, to the at least one pipetting tube (24), and having a pressure sensor assigned to the at least one pipetting tube (24), wherein the method comprises the following steps:
moving the pipetting tip (20) towards the sample container (26),
moving the pipetting piston (22) in a direction opposite the movement direction of the pipetting tip (20),
recording the pressure existing in the pipetting tip (20), and comparing a pressure measurement value (12) representing the recorded pressure (10) to a target measurement value (14),
recording a pressure difference moment (I, LL), at which the pressure measurement value (12) is outside of a tolerance range determined by the target measurement value (14),
**characterized in that** said method additionally comprises the step of:
determining whether the recorded pressure measurement value (12), in the case of continued recording of the pressure (10) in the pipetting tip (20), is within the tolerance range of the target measurement value (14) during a period of time (18) measured since the pressure difference moment (I, LL).

2. The method according to claim 1, wherein the period of time (18), during which the recorded pressure measurement value (12) is within the tolerance range of the target measurement value (14), is predetermined, wherein the target measurement value (14) is preferably settable.

3. The method according to claim 2, wherein the position of the surface (30) of the liquid sample (28) is determined following the expiry of the predetermined period of time (18), preferably based on the measurement values for the pressure difference moment (I, LL), for the point in time of the period of time expired (18, II), and for associated, in particular, vertical position values of the pipetting tip (20) relative to the sample container (26).

4. The method according to any one of claims 2 or 3, further comprising the step of:
if the pressure measurement value (12) has a value outside of the tolerance range of the target measurement value (14) during the predetermined period of time (18), renewed recording of a next pressure difference moment (I, LL), at which the pressure measurement value (12) is outside of the tolerance range determined by the target measurement value (14), and renewed measuring of the period of time (18), during which the pressure measurement value (12) is within the tolerance range of the target measurement value (14).

5. The method according to any one of the preceding claims, wherein, as the pressure measurement value (12), a derivation, in particular, the first derivation of the recorded actual pressure values (10) in the pipetting tip (20), is used, wherein preferably the amount of the derivation is used.

6. The method according to any one of the preceding claims, wherein the velocity (vₛ) of the movement of the pipetting device or rather pipetting tip (20) towards the sample container (26) and the velocity (vₖ) of the movement of the pipetting piston (24) in opposite direction are essentially the same.

7. The method according to any one of the preceding claims, wherein the period of time (18) from the pressure difference moment (I, LL) is measured by means of a counter.

8. The method according to claims 4 and 7, wherein the counter is reset to an initial value, preferably zero, prior to the renewed measuring of the period of time (18).

9. The method according to any one of the preceding claims, wherein the predetermined period of time (18) or/and the target measurement value (14) are settable in dependency of at least one property of the liquid (28) to be aspirated or rather dispensed.

10. The method according to any one of the preceding claims, wherein the pressure measurement value (12) being outside of the tolerance range of the target measurement value (14) represents a negative pressure existing in the pipetting tip (20).

11. A method for aspirating liquid (28) from a sample container (26) of a metering device, in particular, of a pipetting automat, having a pipetting device, which is moveable to and from the sample container, wherein the pipetting device comprises at least one pipetting tube (24) with a pipetting piston (22) moveable therein, and a pipetting tip (20) attachable, in particular, exchangeable, to the at least one pipetting tube (24), and having a pressure sensor assigned to the at least one pipetting tube (24), wherein the method for aspirating is subsequent to the method for detecting the surface (30) of the liquid sample (28) according to any one of the claims 1 to 10, wherein it comprises at least one of the following steps:
having determined the position (LL) of the surface (30) of the liquid sample (28), moving the pipetting tip (20) into a position (I) above the surface (30) of the liquid sample (28), and, at this position (I), blowing out or rather dispensing of the content of the pipetting tip (20) back into the sample container (26) by moving the pipetting piston (22) in the direction towards the sample container (26);
stopping the movement of the pipetting piston (22);
moving the pipetting tip (20) to the position (LL) of the surface (30) of the liquid sample (28);
moving the pipetting tip (20) into the liquid sample (28), in particular, to a predetermined immersion depth (III);
stopping the movement of the pipetting tip (20);
aspirating a predetermined amount of liquid (28) by moving the pipetting piston (22) in a direction away from the sample container (26);
stopping the movement of the pipetting piston (22);
moving the pipetting tip (20) filled with liquid (28) out of the sample container (26).

## Revendications

1. Procédé de détection de la surface (30) d'un échantillon de liquide (28) dans un porte-échantillon (26) d'un dispositif de dosage, en particulier d'un dispositif de pipetage automatique, avec un dispositif de pipetage mobile à partir et en direction du porte-échantillon, étant précisé que le dispositif de pipetage comprend au moins un tube de pipetage (24) avec un piston de pipetage (22) mobile dans ledit tube (24), et une pointe de pipetage (20) apte à être montée sur ledit tube de pipetage (24), et en particulier remplaçable, et un capteur de pression associé audit tube de pipetage (24), étant précisé que le procédé comprend les étapes suivantes :
déplacement de la pointe de pipetage (20) en direction du porte-échantillon (26),
déplacement du piston de pipetage (22) dans un sens opposé au sens de déplacement de la pointe de pipetage (20),
détection de la pression régnant dans la pointe de pipetage, et comparaison d'une valeur de mesure de pression (12) représentant la pression (10) détectée, avec une valeur de mesure théorique (14),
détection d'un moment de différence de pression (I, LL) où la valeur de mesure de pression (12) est située en dehors d'une plage de tolérance définie par la valeur de mesure théorique (14),
**caractérisé en ce que** le procédé comprend également l'étape qui consiste à :
définir si la valeur de mesure de pression détectée (12), dans le cas d'une détection continue de la pression (10) dans la pointe de pipetage (20), est située à l'intérieur de la plage de tolérance de la valeur de mesure théorique (14) pendant une durée (18) mesurée depuis le moment de différence de pression (I, LL).

2. Procédé selon la revendication 1, étant précisé que la durée (18) pendant laquelle la valeur de mesure de pression détectée (12) est située à l'intérieur de la plage de tolérance de la valeur de mesure théorique (14) est prédéfinie, étant précisé que la valeur de mesure théorique (14) est de préférence réglable.

3. Procédé selon la revendication 2, étant précisé que la position de la surface (30) de l'échantillon de liquide (28) après écoulement de la durée prédéfinie (18) est définie, de préférence sur la base des valeurs de mesure pour le moment de différence de pression (I, LL), pour le moment de la durée écoulée (18, II) et pour des valeurs de position associées, en particulier verticales, de la pointe de pipetage (20) par rapport au porte-échantillon (26).

4. Procédé selon l'une des revendications 2 ou 3, comprenant également l'étape suivante : si la valeur de mesure de pression (12), pendant la durée prédéfinie (18), prend une valeur située en dehors de la plage de tolérance de la valeur de mesure théorique (14), nouvelle détection d'un moment de différence de pression (I, LL) suivant, où la valeur de mesure de pression (12) est située en dehors de la plage de tolérance définie par la valeur de mesure théorique (14), et nouvelle mesure de la durée (18) pendant laquelle la valeur de mesure de pression (12) est située à l'intérieur de la plage de tolérance de la valeur de mesure théorique (14).

5. Procédé selon l'une des revendications précédentes, étant précisé qu'on utilise comme valeur de mesure de pression (12) une dérivée, en particulier la première dérivée des valeurs de pression réelles (10) détectées, dans la pointe de pipetage (20), étant précisé qu'on utilise de préférence la grandeur de la dérivée.

6. Procédé selon l'une des revendications précédentes, étant précisé que la vitesse (vₛ) du déplacement du dispositif de pipetage ou de la pointe de pipetage (20) en direction du porte-échantillon (26), et la vitesse (vₖ) du déplacement du piston de pipetage (24) en sens inverse sont globalement égales.

7. Procédé selon l'une des revendications précédentes, étant précisé que la durée (18) à partir du moment de différence de pression (I, LL) est mesurée à l'aide d'un compteur.

8. Procédé selon les revendications 4 et 7, étant précisé que le compteur, avant une nouvelle mesure de la durée (18), est ramené à la valeur de départ, de préférence zéro.

9. Procédé selon l'une des revendications précédentes, étant précisé que la durée (18) ou/et la valeur de mesure théorique (14) sont réglables en fonction d'au moins une propriété du liquide (28) à aspirer ou à dispenser.

10. Procédé selon l'une des revendications précédentes, étant précisé que la valeur de mesure de pression (12) située en dehors de la plage de tolérance de la valeur de mesure théorique (14) représente une dépression régnant dans la pointe de pipetage (20).

11. Procédé d'aspiration de liquide (28) dans un porte-échantillon (26) d'un dispositif de dosage, en particulier d'un dispositif de pipetage automatique, avec un dispositif de pipetage mobile à partir et en direction du porte-échantillon, étant précisé que le dispositif de pipetage comprend au moins un tube de pipetage (24) avec un piston de pipetage (22) mobile dans ledit tube (24), et une pointe de pipetage (20) apte à être montée sur ledit tube de pipetage (24), et en particulier remplaçable, et un capteur de pression associé audit tube de pipetage (24), étant précisé que le procédé d'aspiration a lieu à la suite du procédé de détection de la surface (30) de l'échantillon de liquide (28) selon l'une des revendications 1 à 10, étant précisé qu'il comprend l'une au moins des étapes suivantes :
après la définition de la position (LL) de la surface (30) de l'échantillon de liquide (28), déplacement de la pointe de pipetage (20) jusqu'à une position (I) située au-dessus de ladite surface (30) de l'échantillon de liquide (28) et, au niveau de cette position (I), expulsion ou émission du contenu de la pointe de pipetage (20) pour le ramener dans le porte-échantillon (26), grâce au déplacement du piston de pipetage (22) en direction du porte-échantillon (26) ;
arrêt du déplacement du piston de pipetage (22) ;
déplacement de la pointe de pipetage (20) jusqu'à la position (LL) de la surface (30) de l'échantillon de liquide (28) ;
déplacement de la pointe de pipetage (20) pour entrer dans l'échantillon de liquide (28), en particulier jusqu'à une profondeur d'immersion (III) prédéfinie ;
arrêt du déplacement de la pointe de pipetage (20) ;
aspiration d'une quantité prédéfinie de liquide (28) grâce au déplacement du piston de pipetage (22) à l'opposé du porte-échantillon (26) ;
arrêt du déplacement du piston de pipetage (22) ;
déplacement de la pointe de pipetage (20) remplie de liquide (28), pour la sortir du porte-échantillon (26).
